# EUROPEAN PATENT APPLICATION

(11) **EP 4 596 959 A1**
(43) Date of publication of application: **06.08.2025**
(21) Application number: 24155119.1
(22) Date of filing: 31.01.2024
(51) Int. Cl.: F21S 45/37, B60Q 1/26, B60Q 1/38, F21W 103/20, F21W 103/30

(54) **A VENTILATED LIGHTING DEVICE FOR A MOTOR VEHICLE**

(71) Applicant: Valeo Vision, 93012 Bobigny (FR)
(72) Inventor: CZERMAK, Pierre, 93012 Bobigny Cedex (FR); ETIENNE, Gabriel, 93012 Bobigny Cedex (FR)
(74) Representative: Valeo Visibility

(57) **Abstract**

The present invention pertains to a ventilated lighting device 100 for a motor vehicle. The lighting device 100 comprises a light source 110 positioned in a space created by a housing 102 and a lens 108. The housing 102 is connected to a fixation part 106 through a flexible leg 104. The fixation part 106 comprises a vent passage 128 connecting a fixation part central passage 130 to the outside atmosphere. Further, a flexible leg central passage 132, the fixation part central passage 130 and the vent passage 128, forms a continuous pathway. Thus, the inside space of lighting device 100 is in communication with the outside atmosphere. Moreover, the outlet opening 128b of the vent passage 128 is covered by an air-permeable membrane 126 such that the air from inside space can flow to outside, thus preventing the increase in air pressure during operation of the light device 100.

## Description

### TECHNICAL FIELD

The present invention relates to a ventilated lighting device for a motor vehicle, and more particularly to a hidden ventilation system for a signal lamp of a motor vehicle.

### STATE OF THE ART

In motor vehicles, lighting devices such as signal lamps are used to provide various signals such as direction indication, vehicle breakdown indication etc. to other road users. These signal lamps/turn indicators comprise light source(s) enclosed by a housing and a lens, such that the light from the light source is directed outwards through the lens. A harness connects the light source with the vehicle electrical system for desired operation of the lamp. The lens is mounted on the housing in a sealed manner and the harness is routed inside the closed space formed by the housing and the lens through a grommet, thus making the lamp assembly completely sealed.

Due to the heat generated from the light source, the temperature of air present in the closed space of the lighting device increases and the air expands, in turn increasing the pressure. Moreover, the temperature inside the closed space increases/ decreases based on altitude and temperature conditions in which the vehicle is being used, thereby leading to overpressure/ underpressure inside the lighting device. This increased/decreased pressure leads to mechanical failure such as cracking of seal between lens and housing. Moreover, cracked seal leads to moisture seeping inside the lens causing condensation inside the lens.

Further, condensation on a lens of the light device is another frequent issue caused by increased humidity inside the light device. When the lens temperature drops below dew point temperature, condensation may occur on the lens of the light device. This phenomenon of condensation is also called fogging of the light device. This may occur in situations like using vehicles in cold and/ or rainy weather conditions, during washing vehicles especially after the lamp is turned ON for a considerable duration, hot engine environments during engine idling, or when the light device is exposed to sunlight in cold weather conditions. The fogging of the light device hampers the lighting function of the light device.

In order to counter this issue, a venting mechanism/ drainage holes are provided in the lamp. However, conventional venting mechanisms are provided in the housing of the lamp and are visible from outside, which may affect styling/visual appeal of the vehicle in general. Moreover, as these venting holes are exposed, there is a serious issue of mud, debris, dust and/or high pressure water jet entering into the lighting device. This hampers functioning of the signal lamp.

The prior art and the conventional systems have various disadvantages as described above and there is a need for a ventilation system for vehicle signal lamps that can overcome the disadvantages of the conventional method.

### SUMMARY OF THE INVENTION

An object of the present invention is to solve the disadvantages described above of known vehicle lighting devices. In particular, the object of the present invention is to provide a ventilation system for a lighting device or a signal lamp of a motor vehicle to prevent mechanical failure due to increased/decreased pressure inside the lighting device.

Another object of the present invention is to provide a hidden vent passage in the lighting device for ventilation of the space inside the lighting device without affecting visual appeal of the vehicle.

Yet another object of the present invention is to provide a vent passage in the lighting device for preventing fogging of the light device.

According to an embodiment of the present invention, there is provided a lighting device for a motor vehicle. The device comprises a housing, a lens configured to be mounted on the housing, at least one light source configured to be positioned in a space formed by the housing and the lens, a fixation part and a flexible leg configured to connect the housing to the fixation part. The fixation part is configured with a vent passage connecting the space formed by the housing and the lens to the outside of the lighting device. Advantageously, the vent passage allows the space inside the lighting device to communicate with the outside atmosphere, thus preventing generation of overpressure inside the lighting device.

In a non-limiting embodiment of the present invention, the vent passage comprises an inlet opening positioned in a fixation part central passage and an outlet opening positioned on a surface of the fixation part facing vehicle interface when the lighting device is assembled on the vehicle. Thus, the vent passage communicatively connects the fixation part central passage with the outside atmosphere.

In a non-limiting embodiment of the present invention, the fixation part comprises a recess having a seating area provided around the outlet opening, for mounting a membrane. The membrane is configured to be mounted on the seating area of the recess by any suitable mounting means such as glue, welding etc. Further, the membrane is mounted in such a manner that it covers at least the outlet opening of the vent passage.

In a non-limiting embodiment of the present invention, the membrane is configured to be air-permeable and water impervious. Advantageously, the membrane allows air to pass through it, at the same time it does not allow the water to pass through it. Thus, the membrane prevents entry of unwanted materials such as mud, debris, dust etc., into the inside space of the lighting device, through vent passage.

In a non-limiting embodiment of the present invention, the vent passage is configured to be inclined with respect to the axis of the fixation part central passage. Therefore, the vent passage bypasses a grommet installed in the fixation part central passage.

In a non-limiting embodiment of the present invention, the vent passage is configured to be inclined at a predetermined angle with respect to the axis of the fixation part central passage.

In a non-limiting embodiment of the present invention, the inlet opening of the vent passage is configured to be positioned at a predefined offset distance from edge of the fixation part central passage. This ensures that the flexible leg can be connected to the fixation part by any desired connecting means without blocking/covering the inlet opening of the vent passage.

In a non-limiting embodiment of the present invention, the outlet opening of the vent passage is configured to be hidden by the vehicle interface, upon mounting the lighting device on the motor vehicle. As the vent opening is provided on the fixation part which will not be visible once the lighting device is mounted on the vehicle, the styling of the lighting device is not affected.

In a non-limiting embodiment of the present invention, the fixation part central passage is configured to be axially aligned with a flexible leg central passage of the flexible leg.

In a non-limiting embodiment of the present invention, the flexible leg central passage, the fixation part central passage and the vent passage are configured to form a continuous pathway connecting the space formed by the housing and the lens to the outside atmosphere. Therefore, during operation, when the air present in the inner space of the lighting device gets heated, it can flow out of the lighting device, thereby balancing the pressure inside and outside of the lighting device.

In a non-limiting embodiment of the present invention, the vent passage is configured to be a cylindrical passage or conical passage or square passage or a passage of any polygonal shape.

In a non-limiting embodiment of the present invention, the lens is configured to be securely mounted on the housing by welding, such as ultrasonic welding. Alternatively, any suitable joining technique can be used for the same.

In a non-limiting embodiment of the present invention, the light source is configured to be connected to the vehicle electrical system by a harness routed through a grommet mounted in the fixation part central passage.

The present invention also relates to a turn indicator for a motor vehicle comprising at least one lighting device as has just been presented, wherein the lighting device is configured to be assembled on the vehicle by mounting the fixation part on the vehicle.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig. 1 illustrates a lighting device viewed from the front side, according to an embodiment of the present invention.
Fig. 2 illustrates an exploded view of the lighting device, according to an embodiment of the present invention.
Fig. 3 illustrates the lighting device viewed from the backside, according to an embodiment of the present invention.
Fig. 4A illustrates a fixation part of the lighting device, according to an embodiment of the present invention.
Fig. 4B illustrates a view of the fixation part taken in the direction of arrow `V1' in FIG. 4A, according to an embodiment of the present invention.
Fig. 4C illustrates a cross-sectional view of the fixation part taken along line A-A of Fig. 4B, according to an embodiment of the present invention.
Fig. 4D illustrates an exploded view of the fixation part, according to an embodiment of the present invention.
Fig. 5A illustrates a view of the lighting device taken in the direction of arrow 'V2' in FIG. 1.
Fig. 5B illustrates a cross-sectional view of the lighting device taken along line B-B of Fig. 5A.

### DETAILED DESCRIPTION OF THE INVENTION

Hereinafter, embodiments of the present invention will be described with reference to the accompanying drawings.

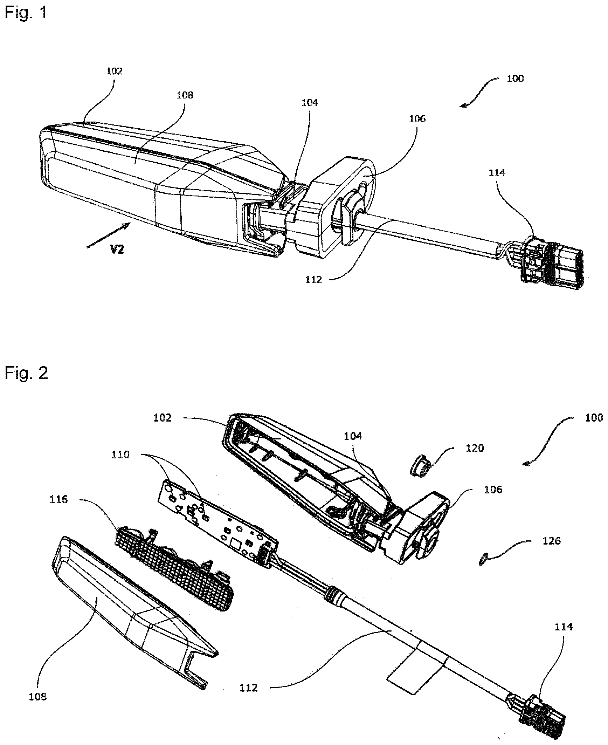

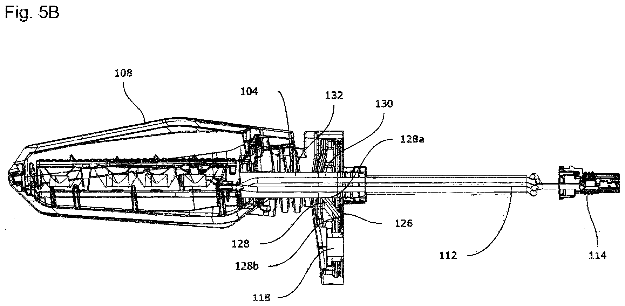

Fig. 1 shows a lighting device **100,** according to an embodiment of the present invention. The lighting device **100** for a motor vehicle comprises a housing **102,** a lens **108,** at least one light source **110** (shown in Fig. 2), a flexible leg **104,** a fixation part **106,** a harness **112** and a connector **114.** Fig. 2 shows an exploded view of the lighting device **100,** according to an embodiment of the present invention. Referring to Fig. 1 and Fig. 2, the lens **108** is mounted on the housing **102** creating a closed space, wherein the light source **110** along with a collimator **116** is positioned in the closed space, such that the illumination from the light source **110** is directed outwards through the lens **108.** The harness **112** is configured to connect the light source **110** to the vehicle electrical system through the connector **114.** The flexible leg **104** is connected to the housing **102** at one end and another end of the flexible leg **104** is connected to the fixation part **106.** The flexible leg **104** has a central passage, a flexible leg central passage **132** (shown in Fig. 5B) and the fixation part **106** has central passage, a fixation part central passage **130** (shown in Fig. 8). In the assembled state, the flexible leg central passage **132** and the fixation part central passage **130** are aligned axially and the harness **112** is routed through these passages.

In an embodiment of the present invention, the lens **108** is securely mounted on the housing **102** by any suitable welding techniques such as ultrasonic welding etc.

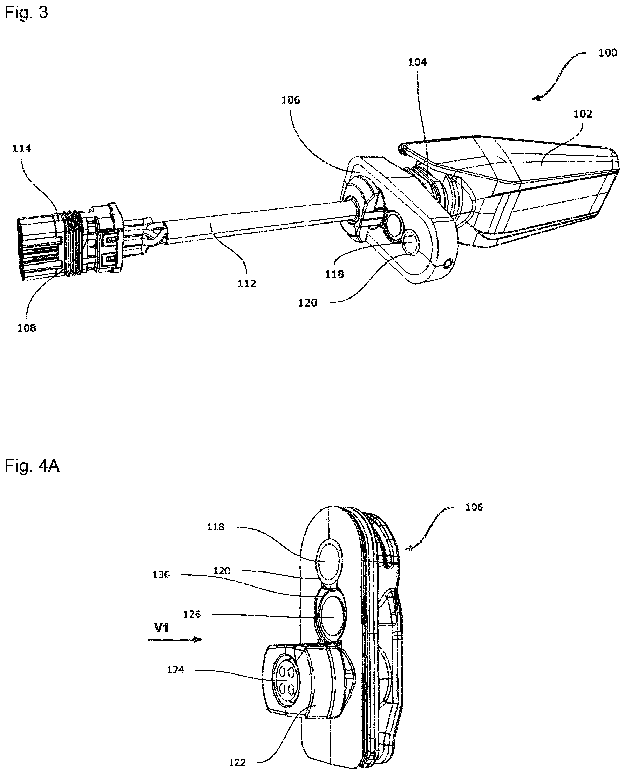

As shown in Fig. 2 and Fig. 3, the fixation part **106** comprises a mounting hole **118** with a bush **120** for mounting the lighting device **100** on the vehicle with a screw.

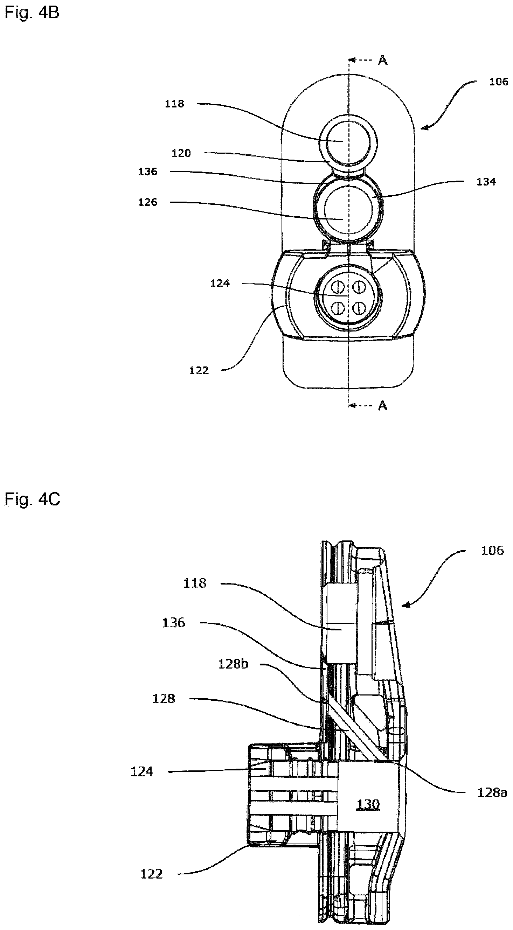

Fig. 4A shows a 3D view of the fixation part **106** and Fig. 4B shows a view of the fixation part **106** taken in the direction of arrow `V1' in FIG. 4A. A projection **122** of the fixation part **106** is configured to accommodate a grommet **124** to seal the fixation part central passage **130** and harness wires **112** are routed through the grommet **124.** The projection **122** is formed on a side of the fixation part **106** opposite to the flexible leg **104.** The fixation part **106** further comprises a recess **136** having a seating area **134,** formed adjacent to the projection **122.**

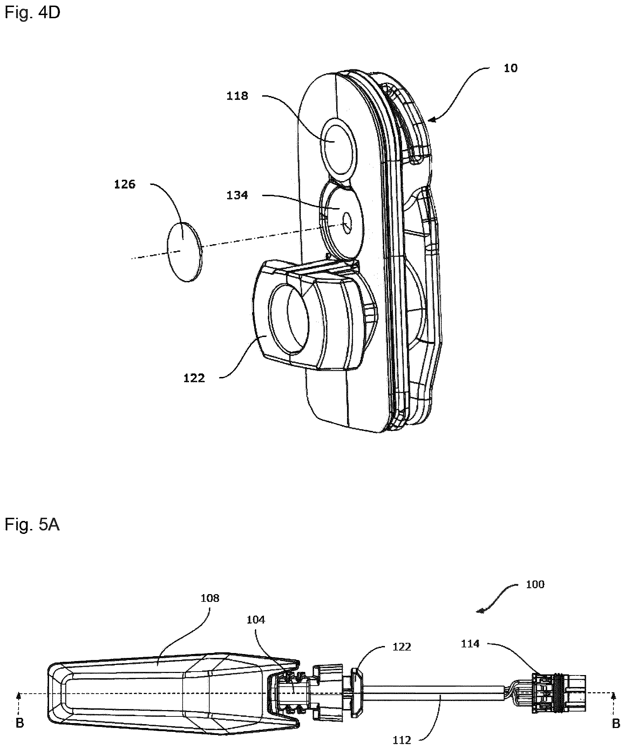

Fig. 4C shows a cross-sectional view taken along line A-A of Fig. 4B. The fixation part **106** further comprises a vent passage **128** having an inlet opening **128a** in the fixation part central passage **130** and an outlet opening **128b** at the seating area **134** such that the air from fixation part central passage **130** can flow to the outside of the lighting device **100** and vice versa. The vent passage **128** is configured to be inclined with respect to the axis of the fixation part central passage **130** such that the vent passage **128** bypasses the grommet **124.** Further, the membrane **126** is mounted on the seating area **134** such that the outlet opening **128b** of the vent passage **128** is entirely covered, thereby restricting entry of dirt, water, and foreign materials etc., inside the lighting device **100.** Fig. 4D shows the exploded view of the fixation part **106** by axially displacing the membrane **126.**

In an embodiment of the present invention, the membrane **126** is an air permeable and water impervious membrane, which does not allow water to pass but allows the air to pass through it.

In an embodiment of the present invention, the vent passage **128** is a cylindrical passage forming elliptical inlet opening **128a** and elliptical outlet opening **128b.**

In an alternate embodiment of the present invention, the vent passage **128** is a tapered passage or conical passage wherein diameter of the passage **128** increases from inlet opening **128a** towards the outlet opening **128b** or vice versa.

In an alternate embodiment of the present invention, the vent passage **128** is a square passage or a passage of any polygonal shape.

In an alternate embodiment of the present invention, the vent passage **128** is a square passage or a passage of any polygonal shape, wherein area of cross section of the passage **128** increases from inlet opening **128a** towards the outlet opening **128b** or vice versa

In an embodiment of the present invention, the inlet opening **128a** of the vent passage **128** is positioned at a predefined offset distance from edge of the fixation part central passage **130.**

In an embodiment of the present invention, the vent passage **128** is inclined at any predetermined angle with respect to the axis of the fixation part central passage **130.**

Fig. 5A shows a view of the lighting device **100** taken in the direction of arrow 'V2' in FIG. 1, and Fig. 5B shows a cross-sectional view taken along line B-B of Fig. 5A. As illustrated, the space formed by the housing **102** and the lens **108** is in contact with the outside atmosphere. The flexible leg central passage **132,** the fixation part central passage **130** and the vent passage **128** forms a continuous pathway connecting the space formed by the housing **102** and the lens **108** to the outside atmosphere. Therefore, during operation, when the air inside the space formed by the housing **102** and the lens **108** starts expanding, it can flow through this pathway to exit the lighting device **100.** Thus, the pressure inside the lighting device **100** is balanced, preventing generation of overpressure in the space formed by housing **102** and the lens **108.** Further, the outlet opening **128b** of the vent passage **128** is covered by the membrane **126** to prevent ingress of foreign materials. When the lighting device **100** is assembled on the vehicle, the outlet opening **128b** of the vent passage **128** is hidden by the vehicle interface.

In an exemplary embodiment of the present invention, a turn indicator including at least one lighting device **100** is provided. The turn indicator is assembled on a motor vehicle to perform signaling functions such as but not limited to turn indication, hazard signaling, vehicle lock/unlock indication. The lighting device **100** of the turn indicator includes at least one light source **110** along with optical component(s) such as the collimator **116** positioned in a closed space formed by mounting the lens **108** on a housing **102.** The light source(s) **110** are connected to the vehicle electrical system by the harness **112.** The flexible leg **104** is provided to connect the housing **102** to the fixation part **106.** The fixation part **106** includes the vent passage **128** to connect the space formed by the housing **102** and the lens **108** to the outside of the turn indicator. Therefore, during operation, when the air inside the turn indicator starts expanding due to heat from the light source(s) **110,** it can flow through the vent passage **128** towards the exit. Thus, the pressure inside the turn indicator is balanced, preventing generation of overpressure. Further, the vent passage **128** is covered from outside the fixation part **106** by providing the membrane **126** on the outlet opening **128b** of the vent passage **128** to prevent ingress of foreign materials. The turn indicator is assembled on the vehicle by mounting the fixation part **106** on the vehicle such that the outletopening **128b** of the vent passage **128** is hidden by the vehicle interface.

The person skilled in the art realizes that the present invention by no means is limited to the preferred embodiments described above. On the contrary, many modifications and variations are possible within the scope of the appended claims. In addition, the skilled person readily realizes that the different embodiments described herein may be combined freely to obtain new combinations.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantages.

### LIST OF REFERENCE SIGNS

- 100: Lighting device
- 102: Housing
- 104: Flexible leg
- 106: Fixation part
- 108: Lens
- 110: Light Source
- 112: Harness
- 114: Connector
- 116: Collimator
- 118: Mounting hole
- 120: Bush
- 122: Projection
- 124: Grommet
- 126: Membrane
- 128: Vent Passage
- 128a: Inlet opening
- 128b: Outlet opening
- 130: Fixation part central passage
- 132: Flexible leg central passage
- 134: Seating area
- 136: Recess

## Claims

1. A lighting device (100) for a motor vehicle, the device (100) comprising:
a housing (102);
a lens (108) configured to be mounted on the housing (102);
at least one light source (110) configured to be positioned in a space formed by the housing (102) and the lens (108);
a fixation part (106); and
a flexible leg (104) configured to connect the housing (102) to the fixation part (106);
wherein the fixation part (106) is configured with a vent passage (128) connecting the space formed by the housing (102) and the lens (108) to the outside of the lighting device (100).

2. The lighting device (100) according to claim 1, wherein the vent passage (128) comprises an inlet opening (128a) positioned in a fixation part central passage (130) and an outlet opening (128b) positioned on a surface of the fixation part (106) facing vehicle interface when the lighting device (100) is assembled on the vehicle.

3. The lighting device (100) according to claim 2, wherein the fixation part (106) comprises a recess (136) having a seating area (134) provided around the outlet opening (128b), for mounting a membrane (126).

4. The lighting device (100) according to claim 3, wherein the membrane (126) is configured to be air-permeable and water impermeable.

5. The lighting device (100) according to any of claims 2 to 4, wherein the vent passage (128) is configured to be inclined with respect to the axis of the fixation part central passage (130).

6. The lighting device (100) according to any of claims 2 to 5, wherein the inlet opening (128a) of the vent passage (128) is configured to be positioned at a predefined offset distance from edge of the fixation part central passage (130.

7. The lighting device (100) according to any of claims 2 to 6, wherein the outlet opening (128b) of the vent passage (128) is configured to be hidden by the vehicle interface, upon mounting the lighting device (100) on the motor vehicle.

8. The lighting device (100) according to any of claims 2 to 7, wherein the fixation part central passage (130) is configured to be axially aligned with a flexible leg central passage (132) of the flexible leg (104).

9. The lighting device (100) according to claim 8, wherein the flexible leg central passage (132), the fixation part central passage (130) and the vent passage (128) are configured to form a continuous pathway connecting the space formed by the housing (102) and the lens (108) to the outside atmosphere.

10. The lighting device (100) according to any of preceding claims, wherein the vent passage (128) is configured to be a cylindrical passage or conical passage or square passage or a passage of any polygonal shape.

11. The lighting device (100) according to any of preceding claims, wherein the lens (108) is configured to be securely mounted on the housing (102) by welding.

12. The lighting device (100) according to any of claims 2 to 11, wherein the at least one light source (110) is configured to be connected to vehicle electrical system by a harness (112) routed through a grommet (124) mounted in the fixation part central passage (130).

13. A turn indicator for a motor vehicle comprising at least one lighting device (100) according to any of the preceding claims, wherein the lighting device (100) is configured to be assembled on the vehicle by mounting the fixation part (106) on the vehicle.
